(19) Europäisches Patentamt
European Patent Office
Office européen des brevets

(11) **EP 4 201 745 A1**

(12) **EUROPEAN PATENT APPLICATION**
published in accordance with Art. 153(4) EPC

(43) Date of publication:
**28.06.2023 Bulletin 2023/26**

(21) Application number: **21858373.0**

(22) Date of filing: **19.08.2021**

(51) International Patent Classification (IPC):
**B60R 1/00** (2022.01)        **G03B 15/00** (2021.01)
**G03B 15/03** (2021.01)        **G03B 7/00** (2021.01)
**H04N 5/225** (2006.01)        **H04N 5/232** (2006.01)

(52) Cooperative Patent Classification (CPC):
**B60R 1/00; G03B 7/00; G03B 15/00; G03B 15/03;
H04N 23/00; H04N 23/60**

(86) International application number:
**PCT/JP2021/030393**

(87) International publication number:
**WO 2022/039229 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.08.2020   JP 2020140273
21.08.2020   JP 2020140277**

(71) Applicants:
• **KOITO MANUFACTURING CO., LTD.**
**Minato-ku**
**Tokyo 108-8711 (JP)**

• **Brightway Vision Ltd.**
**Tirat Hacarmel 3508506 (IL)**

(72) Inventors:
• **ENDO Yoshihisa**
**Shizuoka-shi Shizuoka 424-8764 (JP)**
• **KANO Jun**
**Shizuoka-shi Shizuoka 424-8764 (JP)**
• **KATO Manabu**
**Shizuoka-shi Shizuoka 424-8764 (JP)**
• **WATANO Yuichi**
**Shizuoka-shi Shizuoka 424-8764 (JP)**

(74) Representative: **Grünecker Patent- und
Rechtsanwälte
PartG mbB
Leopoldstraße 4
80802 München (DE)**

(54) **AUTOMOTIVE SENSING SYSTEM AND GATING CAMERA**

(57)     A sensing system 10 is used for driving assistance or automatic driving. A gating camera 20 is controlled to be in an enabled state/disabled state according to a traveling environment. The gating camera 20 divides a field of view into a plurality of ranges in a depth direction and generates a plurality of slice images corresponding to the plurality of ranges in the enabled state. A main controller 60 processes an output of a main sensor group 50 and an output of the gating camera 20.

FIG.1

EP 4 201 745 A1

# Description

TECHNICAL FIELD

The present disclosure relates to a sensing system for vehicle.

BACKGROUND ART

An object identification system that senses a position and a type of an object present in the vicinity of a vehicle is used for driving assistance and automatic driving. The object identification system includes a sensor and a computational processing device that analyzes an output of the sensor. The sensor is selected from a camera, light detection and ranging or laser imaging detection and ranging (LiDAR), a millimeter wave radar, an ultrasonic sonar, an active sensor, and the like in consideration of use, required accuracy, and cost.

CITATION LIST

PATENT LITERATURE

Patent Literature 1: JP2009-257983A
Patent Literature 2: WO2017/110413A1

SUMMARY OF INVENTION

TECHNICAL PROBLEM

As an active sensor that replaces a TOF camera, a gating camera or a gated camera is proposed (Patent Literatures 1 and 2). The gating camera divides an imaging range into a plurality of ranges, and performs imaging by changing an exposure timing and exposure time on a range basis. Accordingly, a slice image is obtained on a target range basis, and the slice image includes only an object in the corresponding range.

The present inventors considered adding (sensor fusion) the gating camera to the object identification system in the related art, and came to recognize the following problems.

The gating camera is an active sensor, and includes an illumination device that illuminates a subject with pulse illumination light and an image sensor that captures reflective light from the subject. To image an object 100 m or more ahead by the gating camera, it is necessary to increase an output of the illumination device. In addition, since the reflective light from the far away object is weak, it is necessary to integrate the weak reflective light and emit light by the illumination device a plurality of times on an imaging basis. Constantly operating such a gating camera consumes a fairly large amount of power. An increase in power consumption may cause deterioration in fuel efficiency.

The present disclosure is made in such circumstances, and an exemplary object of an aspect thereof is to provide a sensing system fusing with a gating camera.

SOLUTION TO PROBLEM

An aspect of the present disclosure relates to a sensing system for driving assistance or automatic driving. The sensing system includes: a main sensor; a gating camera controlled to be in an enabled state/disabled state according to a traveling environment, the gating camera being configured to divide a field of view into a plurality of ranges in a depth direction and generate a plurality of slice images corresponding to the plurality of ranges in the enabled state; a main controller configured to process an output of the main sensor and an output of the gating camera.

Another aspect of the present disclosure relates to a gating camera. The gating camera constitutes an automotive sensing system together with a main sensor and a main controller configured to process an output of the main sensor. The gating camera includes: an illumination device configured to emit pulse illumination light; an image sensor; and a camera controller configured to control a light emission timing of the illumination device and an exposure timing of the image sensor and generate by the image sensor a plurality of image data corresponding to a plurality of ranges. The gating camera is controlled to be enabled/disabled according to an instruction from the main controller.

Another aspect of the present disclosure further relates to a gating camera. The gating camera constitutes an automotive sensing system together with a main sensor and a main controller configured to process an output of the main sensor. The gating camera includes: an illumination device configured to emit pulse illumination light; an image sensor; and a camera controller configured to determine an enabled state and a disabled state of the gating camera according to a traveling environment, control a light emission timing of the illumination device and an exposure timing of the image sensor, and generate by the image sensor a plurality of image data corresponding to a plurality of ranges.

A sensing system according to an aspect of the present disclosure is used for driving assistance or automatic driving. The sensing system includes: a main sensor; a gating camera; and a main controller configured to process an output of the main sensor and an output of the gating camera. The gating camera generates a slice image corresponding to a range of interest (target range) according to a control signal from the main controller.

A gating camera according to an aspect of the present disclosure constitutes an automotive sensing system together with a main sensor and a main controller configured to process an output of the main sensor. The gating camera includes: an illumination device configured to emit pulse illumination light; an image sensor; and a camera controller configured to control a light emission timing of the illumination device and an exposure timing of the image sensor, and generate by the image sensor a slice image corresponding to a range of interest according to a control signal from the main controller.

## ADVANTAGEOUS EFFECTS OF INVENTION

According to the present disclosure, it is possible to provide a sensing system fusing with a gating camera.

## BRIEF DESCRIPTION OF DRAWINGS

Fig. 1 is a block diagram of a sensing system according to a first embodiment.
Fig. 2 shows operation of a gating camera.
Fig. 3A and Fig. 3B show images obtained by the gating camera.
Figs. 4A to 4C show advantages of the gating camera in bad weather.
Fig. 5 is a time chart showing operation of the sensing system according to the first embodiment.
Fig. 6 is a block diagram of the sensing system according to a second embodiment.
Fig. 7 is a block diagram of the sensing system according to a third embodiment.
Fig. 8A and Fig. 8B show an automobile including the sensing system.
Fig. 9 is a block diagram showing a vehicle lamp according to an embodiment.

## DESCRIPTION OF EMBODIMENTS

An overview of certain exemplary embodiments of the present disclosure will be described. This overview, as an introduction of the detailed description to be described later, is intended to simplify and describe certain concepts of one or more embodiments for the purpose of basic understanding of the embodiments, and is not intended to limit the scope of the invention or disclosure. This overview is not a comprehensive overview of all conceivable embodiments, and is not intended to limit components that are necessary for the embodiments. For convenience, "an embodiment" may be used to refer to one embodiment (example or modification) or a plurality of embodiments (examples or modifications) disclosed in the present description.

1. According to one embodiment, a sensing system includes: a main sensor; a gating camera controlled to be in an enabled state/disabled state according to a traveling environment, the gating camera being configured to divide a field of view into a plurality of ranges in a depth direction and generate a plurality of slice images corresponding to the plurality of ranges in the enabled state; a main controller configured to process an output of the main sensor and an output of the gating camera.

An increase in power consumption can be prevented by operating the gating camera only in a necessary situation based on the traveling environment, instead of operating the gating camera at all times, and using the gating camera as an auxiliary sensor that assists the main sensor.

In one embodiment, the main controller may control the enabled state/disabled state of the gating camera according to the traveling environment.

In one embodiment, the gating camera may control the enabled state/disabled state of the gating camera itself according to the traveling environment.

In one embodiment, the gating camera may be enabled in bad weather. In a case of a general camera, raindrops, snow, and fog appear in an image in bad weather such as rainfall, snowfall, and fog, and thus the amount of information contained in the image of the camera decreases. In contrast, the gating camera can remove rain, snow, and fog contained in a range other than the range to be measured. That is, the slice image generated by the gating camera includes more information than the general camera in bad weather. Therefore, in the main controller or the gating camera, by determining the quality of weather and using the gating camera in bad weather, a decrease in the sensing capability of the main sensor can be recovered.

In one embodiment, the gating camera may be enabled when the main sensor has a malfunction. The malfunction of the main sensor may include a situation in which a target cannot be recognized from the output image, a situation in which a recognition rate decreases, and the like.

In one embodiment, the gating camera may be enabled when recognition accuracy for an object of the main controller is lower than a predetermined threshold.

In one embodiment, the enabled state/disabled state of the gating camera may be controlled based on at least one of an output of a rain sensor or a fog sensor mounted on a vehicle, and an operation state of a wiper or a fog lamp.

In one embodiment, the enabled state/disabled state of the gating camera may control the gating camera based on a state of a driver. The sense of tension of the driver increases when the visibility is poor due to bad weather, and this appears in the state of the driver, for example, gestures, postures, and movements of eyes. Therefore, bad weather can be estimated by monitoring the state of the driver.

In one embodiment, the main controller may use the output of the gating camera for driving assistance or control of automatic driving.

In one embodiment, the main controller may display the output of the gating camera on a display.

2. According to one embodiment, a sensing system includes: a main sensor; a gating camera; and a main controller configured to process an output of the main sensor and an output of the gating camera. The gating camera generates a slice image corresponding to a range of interest according to a control signal from the main controller.

In this configuration, the gating camera does not always operate, and only performs imaging of a range requested by the main controller under control of the main controller. An increase in power consumption can be prevented by using the gating camera as an auxiliary sensor that assists the main sensor.

The main sensor may include a sensor configured to detect a distance to an object, such as a millimeter wave radar or a stereo camera. Alternatively, the main sensor may include a monocular camera, and the main controller may acquire a distance to an object by image processing.

The gating camera may supply the slice image corresponding to the range of interest to the main controller.

The gating camera may define a plurality of ranges by dividing a field of view in a depth direction, and select one of the plurality of ranges as the range of interest based on the control signal.

When the main controller detects an object based on the output of the main sensor, the main controller may supply the gating camera with the control signal including position data designating a distance to the object or a range in a depth direction in which the object is contained to the gating camera.

The gating camera may return information indicating whether an object is contained in the range of interest to the main controller.

The gating camera may include an identifier configured to detect a type (also referred to as a class or a category) of an object present in the range of interest based on the slice image, and return a detection result by the identifier to the main controller.

The main controller may supply data indicating a type of an object detected based on the output of the main sensor to the gating camera, and include an identifier configured to detect a type of an object present in the range of interest based on the slice image, and return a match and mismatch between the type detected by the classifier and the type indicated by the data to the main controller.

According to one embodiment, a gating camera includes: an illumination device configured to emit pulse illumination light; an image sensor; and a camera controller configured to control a light emission timing of the illumination device and an exposure timing of the image sensor, and generate by the image sensor a slice image corresponding to a range of interest according to a control signal from the main controller.

In this configuration, the gating camera does not always operate, and only performs imaging of a range requested by the gating camera under control of the main controller. An increase in power consumption can be prevented by using the gating camera as an auxiliary sensor that assists the main sensor.

(Embodiments)

Hereinafter, preferred embodiments will be described with reference to the drawings. The same or equivalent components, members, and processing shown in the drawings are denoted by the same reference numerals, and repeated description thereof will be omitted appropriately. The embodiments are not intended to limit the scope of the disclosure or invention and are merely examples, and all features described in the embodiments and combinations thereof are not necessarily essential to the disclosure or invention.

(First Embodiment)

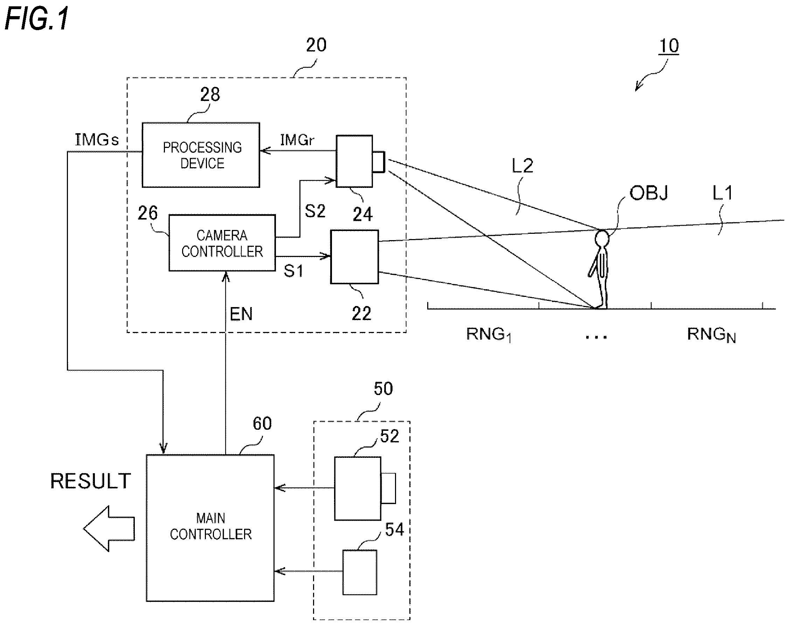

Fig. 1 is a block diagram of a sensing system 10 according to a first embodiment. The sensing system 10 is mounted on a vehicle such as an automobile or a motorcycle for the purpose of driving assistance or automatic driving, and detects an object OBJ present in the vicinity of the vehicle.

The sensing system 10 includes a main sensor group 50, a main controller 60, and a gating camera 20. The main sensor group 50 may include one or more sensors. For example, the main sensor group 50 includes a camera 52 and a millimeter wave radar 54. Alternatively, the main sensor group 50 may include a stereo camera. Alternatively, the main sensor group 50 may include a LiDAR or the like.

The main controller 60 detects a position and a type of the object in the vicinity of the vehicle based on an output of the main sensor group 50, and outputs a detection result RESULT. For example, the main controller 60 may include an identifier (classifier), and the detection result RESULT may include information on a type (category, class) and a position of a target object.

The gating camera 20 divides a field of view into a plurality of ranges $RNG_1$ to $RNG_N$ in a depth direction, and generates a plurality of slice images $IMGs_i$ to $IMGs_N$ corresponding to the plurality of ranges $RNG_1$ to $RNG_N$. Adjacent ranges may overlap each other in the depth direction at a boundary thereof.

The gating camera 20 includes an illumination device 22, an image sensor 24, a camera controller 26, and a computational processing device 28.

The illumination device (light projector) 22 illuminates the field of view ahead the vehicle with pulse illumination light L1 in synchronization with a light emission timing signal S1 supplied from the camera controller 26. The pulse illumination light L1 is preferably infrared light, but is not limited thereto, and may be visible light having a predetermined wavelength. An example of the illumination device 22 includes a laser diode (LD) or an LED. In a system in which the gating camera 20 is used only at night, a wavelength of the pulse illumination light L1 may be a near infrared wavelength near 800 nm. In a system in which the gating camera 20 is used all day and all night, the pulse illumination light L1 may have a wavelength range larger than 1 $\mu$m.

The image sensor 24 includes a plurality of pixels, can perform exposure control in synchronization with an exposure timing signal S2 supplied from the camera controller 26, and generates a slice image IMGr including a plurality of pixels. The image sensor 24 has sensitivity to the same wavelength as that of the pulse illumination light L1, and captures reflective light (return light) L2 reflected by the object OBJ. The slice image IMGr generated by the image sensor 24 for the i-th range $RNG_i$ is referred to as a raw image or a primary image as necessary, and is distinguished from a slice image IMGs that is a final output from the gating camera 20. The raw image IMGr and the slice image IMGs are also simply and collectively referred to as a slice image IMG.

The camera controller 26 changes the light emission timing signal S1 and the exposure timing signal S2 on a range RNG basis to change a time difference between light emission performed by the illumination device 22 and exposure of the image sensor 24. The light emission timing signal S1 defines the timing of starting light emission and light emission time. The exposure timing signal S2 defines the timing of starting exposure (time difference from light emission) and exposure time.

The computational processing device 28 may be implemented by a combination of a processor (hardware) such as a central processing unit (CPU), a microprocessing unit (MPU), a microcomputer, or a graphics processing unit (GPU), and a software program executed by the processor (hardware). The computational processing device 28 may be implemented by only hardware. The computational processing device 28 processes the raw image data IMGr generated by the image sensor 24 and outputs the final slice image IMGs. The computational processing device 28 may be omitted when the output IMGr of the image sensor 24 is directly used as the slice image IMGs.

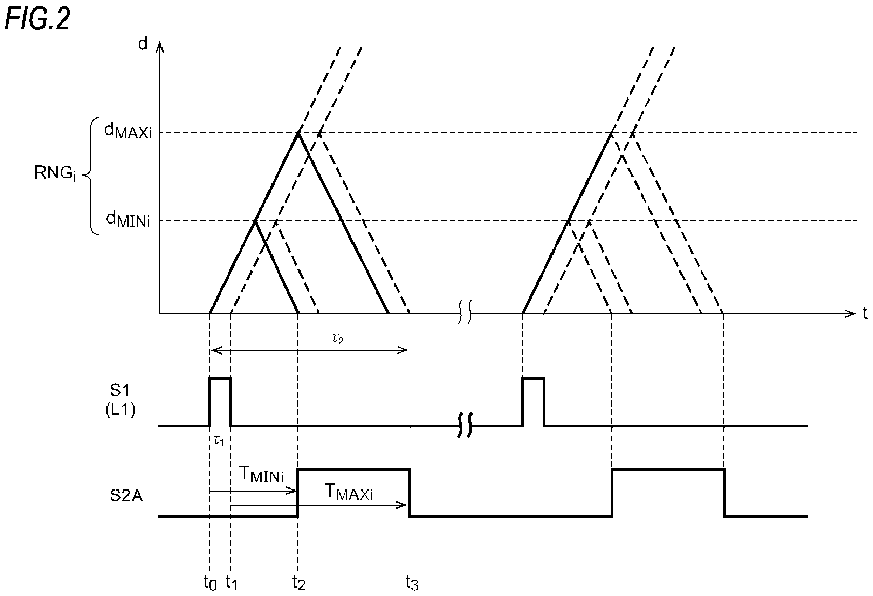

Fig. 2 shows operation of the gating camera 20. Fig. 2 shows a state when the i-th range $RNG_i$ is measured as a range of interest. The illumination device 22 emits light during a light emission period $\tau 1$ between time points $t_0$ and $t_1$ in synchronization with the light emission timing signal S1. An uppermost stage shows a diagram of light beams in which a horizontal axis represents time and a vertical axis represents distance. A distance from the gating camera 20 to a front side boundary of the range $RNG_i$ is set to $d_{MINi}$, and a distance from the gating camera 20 to a deep side boundary of the range $RNG_i$ is set to $d_{MAXi}$.

Round-trip time $T_{MINi}$ from when light emitted from the illumination device 22 at a certain time point reaches the distance $d_{MINi}$ to when reflective light returns to the image sensor 24 is expressed as

$$T_{MINi} = 2 \times d_{MINi}/c,$$

in which c is the speed of light.

Similarly, round-trip time $T_{MAXi}$ from when light emitted from the illumination device 22 at a certain time point reaches the distance $d_{MAXi}$ to when reflective light returns to the image sensor 24 is expressed as

$$T_{MAXi} = 2 \times d_{MAXi}/c.$$

When it is desired to image only the object OBJ contained in the range $RNG_i$, the camera controller 26 generates the exposure timing signal S2 such that the exposure starts at a time point $t_2 = t_0 + T_{MINi}$ and ends at a time point $t_3 = t_1 + T_{MAXi}$. This is one exposure operation.

When the i-th range $RNG_i$ is imaged, a plurality of exposures may be performed. In this case, the camera controller 26 may repeat a set of the above illumination and exposure operation a plurality of times during a predetermined period $\tau 2$. The image sensor 24 outputs a slice image integrated by the plurality of exposures.

In the present embodiment, the gating camera 20 optimizes a shutter speed (exposure time), the number of exposures, sensitivity, irradiation intensity of pulse illumination light, and the like (imaging parameters) on a range basis so that no variation in the exposure (luminance value of object image in slice image) occurs on a range basis.

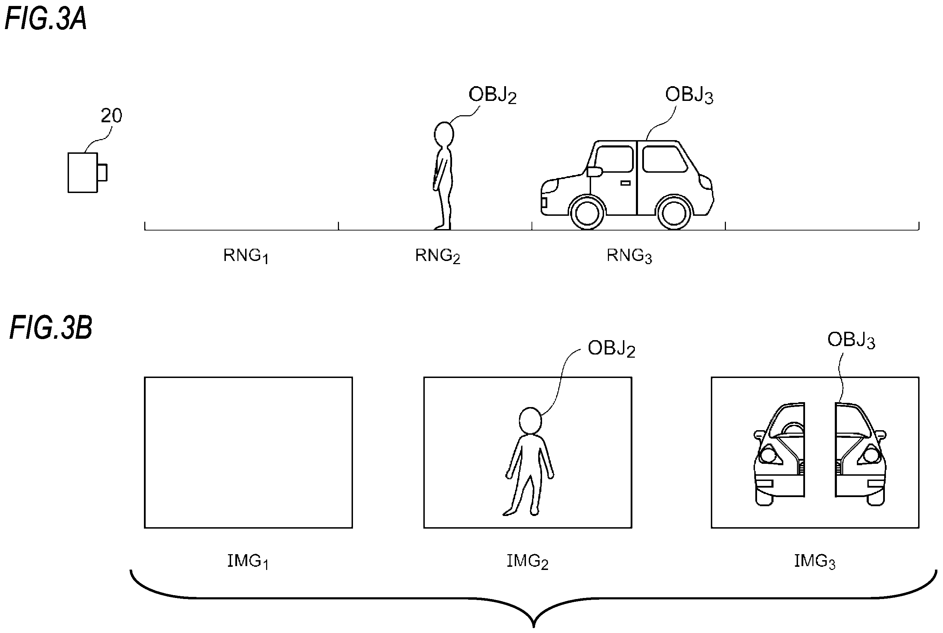

Fig. 3A and Fig. 3B show images obtained by the gating camera 20. In Fig. 3A, an object (pedestrian) $OBJ_2$ is present in the range $RNG_2$, and an object (vehicle) $OBJ_3$ is present in the range $RNG_3$. Fig. 3B shows a plurality of slice images $IMG_1$ to $IMG_3$ obtained in a situation in Fig. 3A. When the slice image $IMG_1$ is captured, no object image appears in the slice image $IMG_1$ since the image sensor 24 is exposed only to reflective light from the range $RNG_1$.

When the slice image $IMG_2$ is captured, only the object image $OBJ_2$ appears in the slice image $IMG_2$ since the image sensor 24 is exposed only to reflective light from the range $RNG_2$. Similarly, when the slice image $IMG_3$ is captured, only the object image $OBJ_3$ appears in the slice image $IMG_3$ since the image sensor 24 is exposed only to reflective light from the range $RNG_3$. In this way, an object can be separately imaged on a range basis by the gating camera 20.

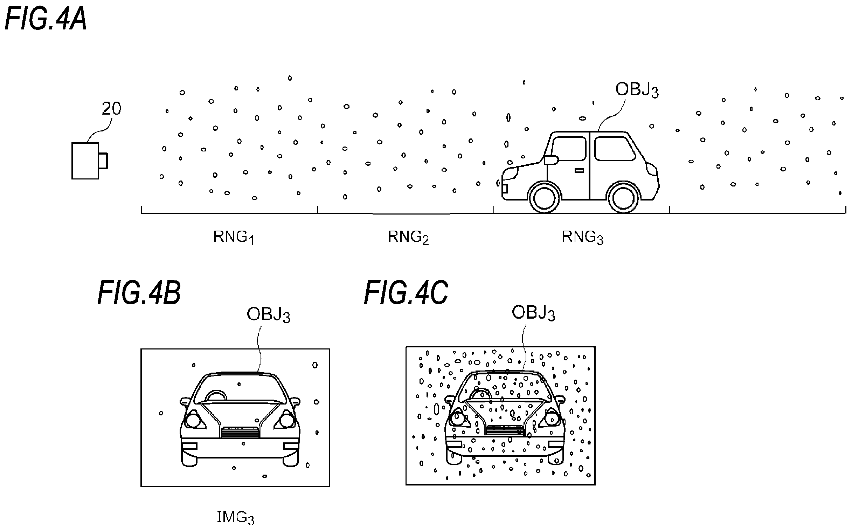

The gating camera 20 is advantageous for imaging in bad weather. Hereinafter, a reason thereof will be described. Figs. 4A to 4C show an advantage of the gating camera 20 in bad weather. Fig. 4A shows an example of a traveling scene in bad weather. The object (vehicle) $OBJ_3$ is present in the range $RNG_3$. Points shown in the drawing schematically indicate obstacles such as raindrops, snow, or fog. Fig. 4B shows the slice image $IMG_3$ of the third range obtained in a situation of Fig. 4A. When the slice image $IMG_3$ is captured, no obstacles (raindrops, snow, or fog) in the range $RNG_1$ or $RNG_2$ are imaged in the slice image $IMG_3$ since the image sensor 24 is exposed only to reflective light from the range $RNG_3$. That is, rain, snow, or fog contained in a range other than a range to be measured can be removed.

Fig. 4C shows an image obtained by imaging the same field of view by a general camera. When an image is captured by a general camera, plural obstacles appear and block the object $OBJ_3$ since reflective light of objects in all the ranges $RNG_3$ appears.

From comparison of Fig. 4B with Fig. 4C, it can be seen that the slice image IMG generated by the gating camera 20 includes more information than the image obtained by the general camera in bad weather.

Reference is made back to Fig. 1. In the present embodiment, the gating camera 20 is used as an auxiliary sensor that assists the main sensor group 50. Therefore, the gating camera 20 does not always operate, and the operation and non-operation (stop) are adaptively selected according to a traveling environment.

When the gating camera 20 is in an operation state, the camera controller 26 generates the light emission timing signal S1 and the exposure timing signal S2, so that slice images of a plurality of ranges are generated. In a stop state of the gating camera 20, the camera controller 26 generates neither the light emission timing signal S1 nor the exposure timing signal S2, so that no slice image is generated.

In the present embodiment, the operation and stop of the gating camera 20 are controlled by the main controller 60. The gating camera 20 is set to the operation state and captures an image in response to assertion of an enable signal EN from the main controller 60.

Specifically, the main controller 60 determines a situation in which the gating camera 20 is necessary, and asserts the enable signal EN only when necessary. The camera controller 26 of the gating camera 20 is set to an operation state in response to the assertion of the enable signal EN, and generates the light emission timing signal S1 and the exposure timing signal S2.

In bad weather, the gating camera 20 is activated (enabled), and the slice image IMGs generated by the gating camera 20 is supplied to the main controller 60. An output from the gating camera 20 is used for driving assistance or control of automatic driving.

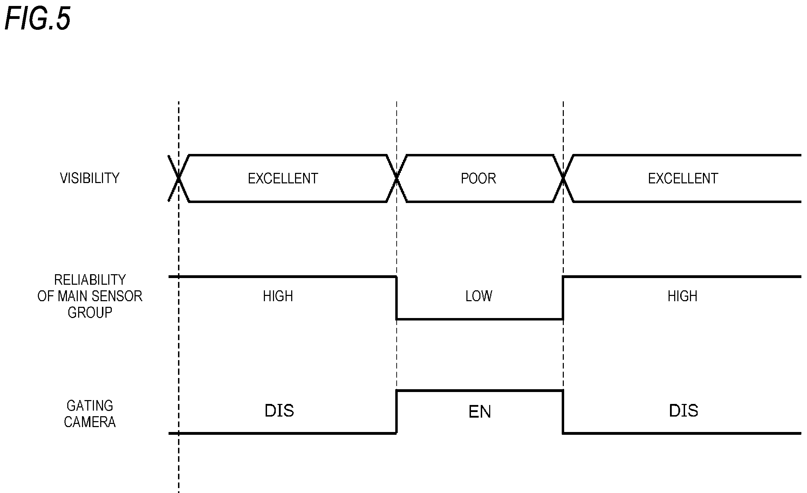

A configuration of the sensing system 10 is described above. Next, operation thereof will be described. Fig. 5 is a time chart showing the operation of the sensing system 10.

Under a condition of good weather (visibility), the main sensor group 50 has high reliability. In this case, the gating camera 20 is in a disabled state, and the main controller 60 detects a target object based on an output of the main sensor group 50.

Under a condition of bad weather (visibility), the reliability of the main sensor group 50 decreases. In this case, the gating camera 20 is enabled, and the main controller 60 detects a target object based on a detection result of the gating camera 20 instead of or in addition to an output of the main sensor group 50.

The above description is the operation of the sensing system 10. According to the sensing system 10, an increase in power consumption by the gating camera 20 can be prevented, and a decrease in performance of the sensing system 10 in bad weather can be prevented.

Next, a specific example of control for the gating camera 20 by the main controller 60 will be described.

In one embodiment, the main controller 60 determines the quality of weather. When bad weather is determined, the enable signal is asserted. By using the gating camera 20 in bad weather, a decrease in the sensing capability of the main sensor group 50 can be recovered.

For example, the main controller 60 may determine the presence or absence of rainfall, snowfall, or fog, in other words, the quality of visibility, based on a sensor output of a rain sensor, a fog sensor, and the like mounted on the vehicle. Alternatively, the main controller 60 may determine the presence or absence of rainfall or snowfall, the rainfall amount, and the snowfall amount based on an operation state (ON, OFF, operation speed) of a wiper. Further, the main controller 60 may determine the presence or absence of fog based on ON/OFF of a fog lamp.

The main controller 60 may determine the presence or absence of rainfall, snowfall, or fog, in other words, the quality of visibility, based on information provided by wireless communication from outside the vehicle.

In one embodiment, the main controller 60 may enable the gating camera 20 when the main sensor group 50 has a malfunction. The malfunction is not limited to a result of bad weather, and may include other factors, for example, a malfunction of the camera 52 of the main sensor group 50 and a malfunction due to adhesion of dirt.

For example, when the recognition accuracy for an object falls below a predetermined threshold, the main controller 60 may enable the gating camera 20, assuming a malfunction of the main sensor group 50. For example, the main controller 60 may determine that the recognition accuracy is reduced when a chance of a certain object of belonging to each of a plurality of classes (types, categories) does not exceed a predetermined threshold.

The sensing system including the main sensor group 50 and the main controller 60 outputs a failure signal (also referred to as an error signal) to a host electron control unit (ECU) of the vehicle. The main controller 60 asserts the failure signal when the sensing based on the output of the main sensor group 50 has a malfunction. The failure signal may be used as the enable signal for the gating camera 20.

In one embodiment, the main controller 60 may monitor the driver, estimate the quality of weather based on a state of the driver, and control the gating camera 20 based on a result thereof. For example, (i) the sense of tension of the driver increases when the visibility is poor due to bad weather, and this may appear in behaviors of the driver, that is, gestures, postures, movements of eyes, and the like. In this case, the behaviors of the driver can be monitored, and the weather can be estimated based on the monitoring result.

(ii) In addition, an increase in the sense of tension of the driver may appear in body temperature and perspiration. In this case, the body temperature and perspiration of the driver can be monitored, and the weather can be estimated based on the monitoring result.

(iii) Alternatively, when the driver operates an accelerator and a brake in a vehicle on which a driving support system is mounted, it is assumed that the operation of the accelerator and the brake is different between good weather and bad weather. In this case, the operation of the accelerator and the brake may be monitored, and the weather may be estimated based on the monitoring result.

(Second Embodiment)

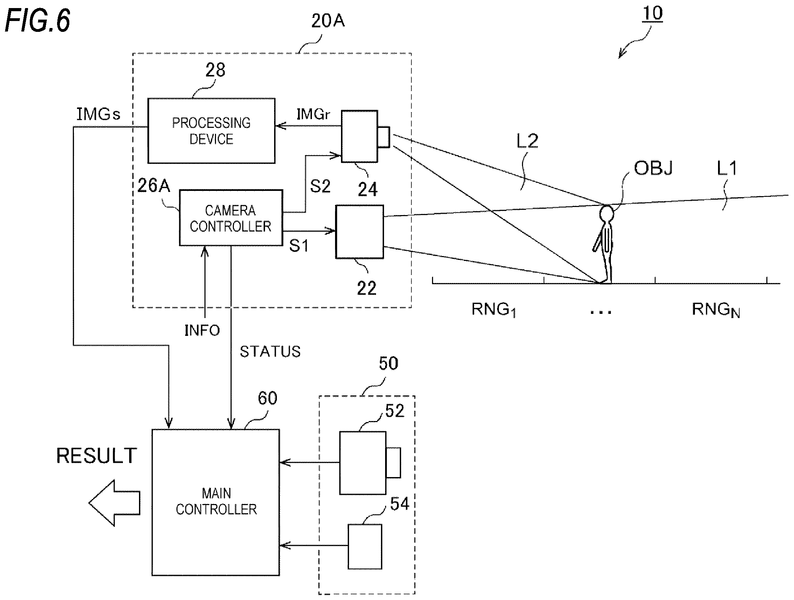

Fig. 6 is a block diagram of the sensing system 10 according to a second embodiment. In the first embodiment, the main controller 60 controls the operation and non-operation states of the gating camera 20. In contrast, in the second embodiment, a gating camera 20A switches between an operation state and a non-operation state by itself.

A method for controlling the operation and non-operation of the gating camera 20A is the same as that described in the first embodiment.

In one embodiment, a camera controller 26A determines the quality of weather, and is set to a stop state in good weather when the main sensor group 50 has high reliability, and is set to an operation state in bad weather when the main sensor group 50 has low reliability. By using the gating camera 20A in bad weather, a decrease in the sensing capability of the main sensor group 50 can be recovered.

For example, information INFO relating to sensors and devices mounted on a vehicle is input to the camera controller 26A. The camera controller 26A may determine the presence or absence of rainfall, snowfall, or fog, in other words, the quality of visibility, based on a sensor output of a rain sensor, a fog sensor, and the like. Alternatively, the camera controller 26A may determine the presence or absence of rainfall or snowfall, the rainfall amount, and the snowfall amount based on an operation state (ON, OFF, operation speed) of a wiper. Further, the camera controller 26A may determine the presence or absence of fog based on ON/OFF of a fog lamp.

The camera controller 26A may determine the presence or absence of rainfall, snowfall, or fog, in other words, the quality of visibility, based on information provided by wireless communication from outside the vehicle.

In one embodiment, the camera controller 26A may set the gating camera 20A to the operation state when the main sensor group 50 has a malfunction. The malfunction is not limited to a result of bad weather, and may include other factors, for example, a malfunction of the camera 52 of the main sensor group 50 and a malfunction due to adhesion of dirt.

For example, when the recognition accuracy for an object falls below a predetermined threshold, the main controller 60 outputs a failure signal (also referred to as an error signal) to a host electron control unit (ECU) of the vehicle, assuming a malfunction of the main sensor group 50. The camera controller 26A may select the operation or non-operation of the gating camera 20A based on the failure signal generated by the main controller 60.

In one embodiment, the camera controller 26A may monitor the driver, estimate the quality of weather based on a state of the driver, and control the operation and stop of the gating camera 20A based on a result thereof.

The camera controller 26A may output a status signal STATUS indicating whether the gating camera 20A is in the operation state or the non-operation state to the main controller 60. The main controller 60 can know whether the gating camera 20A is operating by referring to the status signal STATUS. The main controller 60 can use the slice image IMGs generated by the gating camera 20A during the operation of the gating camera 20A for object recognition or the like. Whether the main controller 60 uses the slice image IMGs for object recognition may be entrusted to the determination of the main controller 60.

(Third Embodiment)

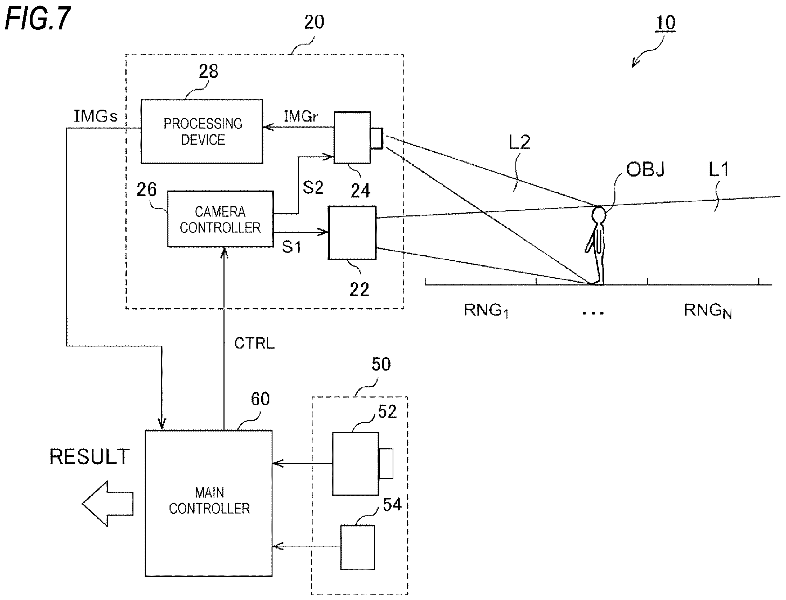

Fig. 7 is a block diagram of the sensing system 10 according to a third embodiment. A basic configuration of the sensing system 10 is the same as that of the first embodiment, and thus the description is omitted and differences will be described.

In the third embodiment, the gating camera 20 divides the field of view into a plurality of ranges $RNG_1$ to $RNG_N$ in the depth direction, and generates a plurality of slice images $IMGs_1$ to $IMGs_N$ corresponding to the plurality of ranges $RNG_1$ to $RNG_N$ (normal imaging mode). Adjacent ranges may overlap each other in the depth direction at a boundary thereof.

In the present embodiment, the gating camera 20 supports an on-demand imaging mode in addition to the normal imaging mode in which imaging is performed in all ranges. The normal imaging mode is not essential, and the gating camera 20 may support only the on-demand imaging mode.

When an imaging mode is set to the on-demand imaging mode, the gating camera 20 generates a slice image RNG _ROI corresponding to a range of interest ROI according to a control signal CTRL from the main controller 60. The range of interest ROI is a section in the depth direction ahead the vehicle, and is set or selected under control of the main controller 60.

The configuration of the sensing system 10 is described above. Next, operation thereof will be described. It is assumed that the vehicle is traveling in bad weather (for example, in thick fog). In thick fog, the camera 52 cannot accurately capture an image of a distant object. On the other hand, although the presence of a certain object can be detected since the millimeter wave radar 54 operates effectively even in the fog, no type of the object can be detected. In such a situation, the main controller 60 provides the gating camera 20 with the control signal CTRL so that the object detected by the millimeter wave radar 54 is imaged. As described above, since the gating camera 20 can obtain an image with higher image quality than the normal camera 52 even in bad weather, information on an object that cannot be captured by the camera 52 can be acquired using the gating camera 20.

The above description is the operation of the sensing system 10. In the sensing system 10, the gating camera 20 is not always operated, and only performs imaging of the range ROI requested by the main controller 60 under the control of the main controller 60. When the gating camera 20 is operated in the normal imaging mode, imaging is performed up to a range in which no object is present and waste is increased, while in the on-demand imaging mode, an increase in power consumption can be prevented by imaging only a range in which the presence of an object is estimated by the main controller 60.

A method for controlling the range of interest ROI is not particularly limited, and certain methods will be described below.

(First Control Example)

The camera controller 26 of the gating camera 20 defines a plurality of ranges $RNG_1$ to $RNG_N$ in advance. The main controller 60 estimates a distance to an object based on an output of the millimeter wave radar 54, and provides distance information to the camera controller 26. The camera controller 26 selects one of the plurality of ranges $RNG_1$ to $RNG_N$ as the range of interest ROI based on the distance indicated by the distance information.

(Second Control Example)

The camera controller 26 of the gating camera 20 defines a plurality of ranges $RNG_1$ to RNGrr in advance. The main controller 60 knows which range each of the plurality of ranges $RNG_1$ to $RNG_N$ is. The main controller 60 estimates a distance to an object based on an output of the millimeter wave radar 54, selects one of the plurality of ranges $RNG_1$ to $RNG_N$ as the range of interest ROI based on the estimated distance, and provides the camera controller 26 with data indicating a range to be imaged.

(Third Control Example)

The camera controller 26 of the gating camera 20 defines no range in advance. The main controller 60 estimates a distance to an object based on an output of the millimeter wave radar 54, and provides distance information to the camera controller 26. The camera controller 26 dynamically determines the range of interest ROI so that the object detected by the main controller 60 is contained.

Next, certain examples of information provided from the gating camera 20 to the main controller 60 will be described.

For example, the gating camera 20 may supply the slice image IMGs corresponding to the range of interest ROI to the main controller 60. The main controller 60 may determine a type of the object present in the range of interest ROI by an identifier possessed by the main controller 60.

The gating camera 20 may include an identifier (classifier) that analyzes the slice image IMGs. This identifier may be installed in the computational processing device 28. The identifier may determine whether an object is contained in the slice image IMGs of the range of interest ROI, and return a determination result to the main controller 60. More advanced, the gating camera 20 may return a type of the object detected by the identifier to the main controller 60.

The main controller 60 may transmit data indicating a type of an obj ect detected based on an output of the main sensor group 50 to the gating camera 20. The gating camera 20 may return, to the main controller 60, a match or mismatch between the type of the object detected based on the slice image IMGs and the type indicated by the received data.

Next, a specific example of control for the gating camera 20 by the main controller 60 will be described.

In one embodiment, the main controller 60 determines the quality of weather. When bad weather is determined, the gating camera 20 may be operated in an on-demand mode.

For example, the main controller 60 may determine the presence or absence of rainfall, snowfall, or fog, in other words, the quality of visibility, based on a sensor output of a rain sensor, a fog sensor, and the like mounted on the vehicle. Alternatively, the main controller 60 may determine the presence or absence of rainfall or snowfall, the rainfall amount, and the snowfall amount based on an operation state (ON, OFF, operation speed) of a wiper. Further, the main controller 60 may determine the presence or absence of fog based on ON/OFF of a fog lamp.

The main controller 60 may determine the presence or absence of rainfall, snowfall, or fog, in other words, the quality of visibility, based on information provided by wireless communication from outside the vehicle, such as vehicle information and communication system (VICS) (registered trademark) information.

In one embodiment, the main controller 60 may enable the gating camera 20 when a part of the main sensor group 50 has a malfunction.

For example, when the recognition accuracy for an object falls below a predetermined threshold, the main controller 60 may enable the gating camera 20, assuming a malfunction of the main sensor group 50. For example, the main controller 60 may determine that the recognition accuracy is reduced when a chance of a certain object of belonging to each of a plurality of classes (types, categories) does not exceed a predetermined threshold.

The sensing system including the main sensor group 50 and the main controller 60 outputs a failure signal (also referred to as an error signal) to a host electron control unit (ECU) of the vehicle. The main controller 60 asserts the failure signal when the sensing based on the output of the main sensor group 50 has a malfunction. By using the assertion of the failure signal as a trigger, the gating camera 20 may be set to the on-demand mode.

In one embodiment, the main controller 60 may monitor the driver, estimate the quality of weather based on a state of the driver, and control the gating camera 20 based on a result thereof. For example, (i) the sense of tension of the driver increases when the visibility is poor due to bad weather, and this may appear in behaviors of the driver, that is, gestures, postures, movements of eyes, and the like. In this case, the behaviors of the driver can be monitored, and the weather can be estimated based on the monitoring result.

(ii) In addition, an increase in the sense of tension of the driver may appear in body temperature and perspiration. In this case, the body temperature and perspiration of the driver can be monitored, and the weather can be estimated based on the monitoring result.

(iii) Alternatively, when the driver operates an accelerator and a brake in a vehicle on which a driving support system is mounted, it is assumed that the operation of the accelerator and the brake is different between good weather and bad weather. In this case, the operation of the accelerator and the brake may be monitored, and the weather may be estimated based on the monitoring result.

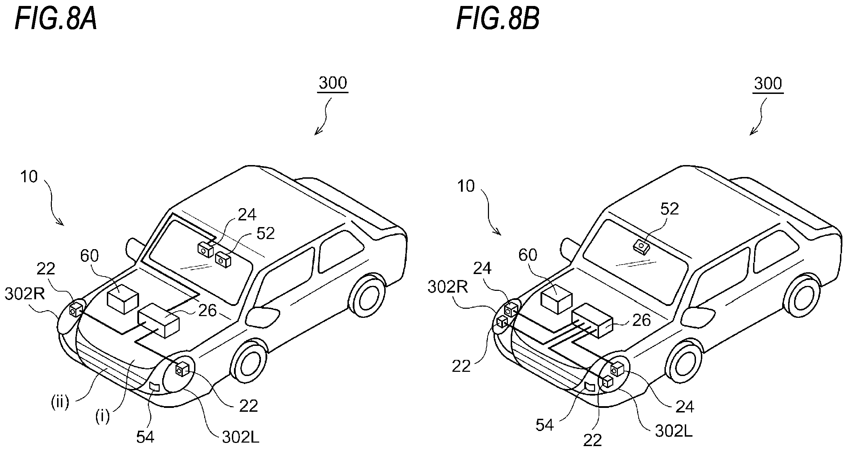

Fig. 8A and Fig. 8B show an automobile 300 including the sensing system 10 according to the first to third embodiments. Reference is made to Fig. 8A. The automobile 300 includes headlamps 302L and 302R.

The camera 52 and the millimeter wave radar 54 of the main sensor group 50 are disposed at locations on the vehicle that are suitable for sensing. For example, the camera 52 is provided on a back side of a rear-view mirror, and the millimeter wave radar 54 is disposed on a front side of the vehicle. The main controller 60 is disposed in a vehicle interior or an engine room.

The illumination device 22 of the gating camera 20 is provided in at least one of the left and right headlamps 302L and 302R. The image sensor 24 may be attached to a part of the vehicle, for example, on the back side of the rear-view mirror. Alternatively, the image sensor 24 may be provided at a front grille or a front bumper. The camera controller 26 may be provided in the vehicle interior, the engine room, or the headlamps.

As shown in Fig. 8B, the image sensor 24 may be provided in either of the left and right headlamps 302L and 302R together with the illumination device 22.

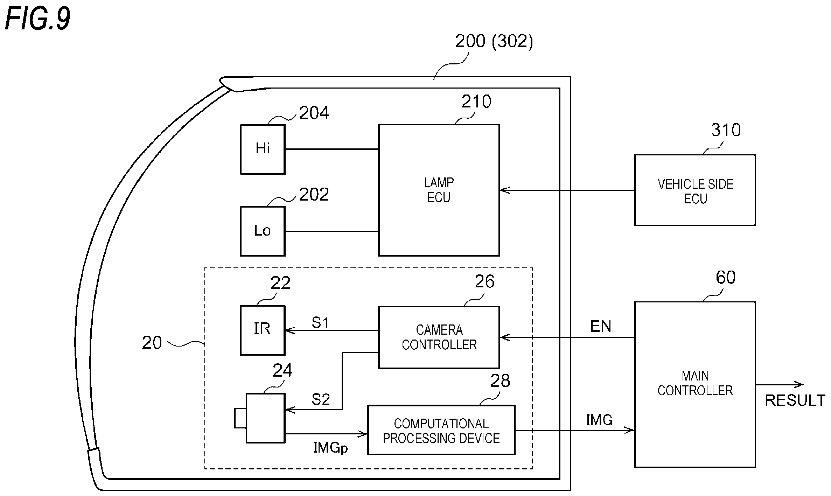

Fig. 9 is a block diagram showing a vehicle lamp 200. The vehicle lamp 200 corresponds to a headlamp 302 of Fig. 8B, and includes a low beam unit 202, a high beam unit 204, a lamp ECU 210, and the gating camera 20.

The lamp ECU 210 controls ON, OFF, or light distribution of the low beam unit 202 and the high beam unit 204 based on a control command from a vehicle side ECU 310.

The gating camera 20 is provided in a housing of the vehicle lamp 200. At least one of the image sensor 24, the camera controller 26, and the computational processing device 28 may be provided outside the housing of the vehicle lamp 200.

In the vehicle lamp 200, the lamp ECU 210 may control an enabled state/disabled state of the gating camera 20.

The embodiments are merely examples, and it should be understood by those skilled in the art that various modifications can be made to combinations of components and processes in the embodiments and that such modifications are also within the scope of the present invention. Hereinafter, the modifications will be described.

(First Modification)

In the embodiments, the slice image IMGs is output from the gating camera 20 to the main controller 60, and the present invention is not limited thereto. For example, an identifier (classifier) may be installed in the computational processing device 28 of the gating camera 20, and an identification result, that is, a type (category) and a position of a target object may be output to the main controller 60.

(Second Modification)

In the embodiments, the output from the gating camera 20 is used for driving assistance or the control of automatic driving, and the present invention is not limited thereto. For example, the gating camera 20 may be activated in bad weather, and the slice image IMGs generated by the gating camera 20 may be displayed on a display device such as a head-up display (HUD) to assist the visibility of the user.

Although the present invention is described using specific terms based on the embodiments, the embodiments merely show one aspect of principles and applications of the present invention, and various modifications and changes in arrangement can be made to the embodiments without departing from the spirit of the present invention defined in the claims.

INDUSTRIAL APPLICABILITY

The present disclosure can be used in a sensing system for vehicle.

REFERENCE SIGNS LIST

S1 light emission timing signal
S2 exposure timing signal
10 sensing system
20 gating camera
22 illumination device
24 image sensor
26 camera controller
28 computational processing device
50 main sensor group
52 camera
54 millimeter wave radar
60 main controller
200 vehicle lamp
202 low beam unit
204 high beam unit
210 lamp ECU
300 automobile
302 headlamp
310 vehicle-side ECU

**Claims**

1. A sensing system for driving assistance or automatic driving, the sensing system comprising:

   a main sensor;
   a gating camera controlled to be in an enabled state/disabled state according to a traveling environment, the gating camera being configured to divide a field of view into a plurality of ranges in a depth direction and generate a plurality of slice images corresponding to the plurality of ranges in the enabled state;
   a main controller configured to process an output of the main sensor and an output of the gating camera.

2. The sensing system according to claim 1,
   wherein the main controller controls the enabled state/disabled state of the gating camera according to the traveling environment.

3. The sensing system according to claim 1,

   wherein the gating camera controls the enabled state/disabled state of the gating camera according to the traveling environment.

4. The sensing system according to claim 1,

   wherein at least a part of the gating camera is provided in a vehicle lamp, and
   wherein the enabled state/disabled state of the gating camera is controlled by a control unit of the vehicle lamp.

5. The sensing system according to any one of claims 1 to 4,
   wherein the gating camera is enabled in bad weather.

6. The sensing system according to any one of claims 1 to 5,
   wherein the gating camera is enabled when the main sensor has a malfunction.

7. The sensing system according to any one of claims 1 to 6,
   wherein the gating camera is enabled when recognition accuracy for an object of the main controller is lower than a predetermined threshold.

8. The sensing system according to any one of claims 1 to 7,
   wherein the enabled state/disabled state of the gating camera is controlled based on at least one of an output of a rain sensor or a fog sensor mounted on a vehicle, and an operation state of a wiper or a fog lamp.

9. The sensing system according to any one of claims 1 to 8,
   wherein the enabled state/disabled state of the gating camera is controlled based on a state of a driver.

10. The sensing system according to any one of claims 1 to 9,
    wherein the main controller uses the output of the gating camera for driving assistance or control of automatic driving.

11. A gating camera constituting an automotive sensing system together with a main sensor and a main controller configured to process an output of the main sensor, the gating camera comprising:

    an illumination device configured to emit pulse illumination light;
    an image sensor; and
    a camera controller configured to control a light emission timing of the illumination device and an exposure timing of the image sensor and generate by the image sensor a plurality of image data corresponding to a plurality of ranges, wherein the gating camera is controlled to be enabled/disabled according to an instruction from the main controller.

12. A gating camera constituting an automotive sensing system together with a main sensor and a main controller configured to process an output of the main sensor, the gating camera comprising:

an illumination device configured to emit pulse illumination light;
an image sensor; and
a camera controller configured to determine an enabled state and a disabled state of the gating camera according to a traveling environment, control a light emission timing of the illumination device and an exposure timing of the image sensor, and generate by the image sensor a plurality of image data corresponding to a plurality of ranges.

13. The gating camera according to claim 12, wherein the camera controller sets the gating camera to the enabled state in bad weather.

14. The gating camera according to claim 12 or 13, wherein the camera controller sets the gating camera to the enabled state when the main sensor has a malfunction.

15. The gating camera according to any one of claims 12 to 14, wherein the camera controller sets the gating camera to the enabled state when recognition accuracy for an object of the main controller is lower than a predetermined threshold.

16. The gating camera according to any one of claims 12 to 15, wherein the camera controller controls the enabled state/disabled state of the gating camera based on at least one of an output of a rain sensor or a fog sensor mounted on a vehicle, and an operation state of a wiper or a fog lamp.

17. The gating camera according to any one of claims 12 to 16, wherein the camera controller controls the enabled state/disabled state of the gating camera based on a state of a driver.

18. A sensing system for driving assistance or automatic driving, the sensing system comprising:

a main sensor;
a gating camera; and

a main controller configured to process an output of the main sensor and an output of the gating camera,
wherein the gating camera generates a slice image corresponding to a range of interest according to a control signal from the main controller.

19. The sensing system according to claim 18, wherein the main sensor includes a millimeter wave radar.

20. The sensing system according to claim 18 or 19, wherein the gating camera supplies the slice image corresponding to the range of interest to the main controller.

21. The sensing system according to claim 18 or 19, wherein the gating camera returns information indicating whether an object is contained in the range of interest to the main controller.

22. The sensing system according to claim 18 or 19, wherein the gating camera includes an identifier configured to detect a type of an object present in the range of interest based on the slice image, and returns a detection result by the identifier to the main controller.

23. The sensing system according to claim 18 or 19,

wherein the main controller supplies data indicating a type of an object detected based on the output of the main sensor to the gating camera, and
wherein the gating camera includes an identifier configured to detect a type of an object present in the range of interest based on the slice image, and returns a match and mismatch between the type detected by the classifier and the type indicated by the data to the main controller.

24. The sensing system according to any one of claims 18 to 23, wherein the gating camera defines a plurality of ranges by dividing a field of view in a depth direction, and selects one of the plurality of ranges as the range of interest based on the control signal.

25. The sensing system according to any one of claims 18 to 23, wherein when the main controller detects an object based on the output of the main sensor, the main controller supplies the gating camera with the control signal including position data designating a distance to the object or a range in a depth direction in which the object is contained.

26. A gating camera constituting an automotive sensing system together with a main sensor and a main controller configured to process an output of the main sensor, the gating camera comprising:

> an illumination device configured to emit pulse illumination light;
> an image sensor; and
> a camera controller configured to control a light emission timing of the illumination device and an exposure timing of the image sensor, and generate by the image sensor a slice image corresponding to a range of interest according to a control signal from the main controller.

27. The gating camera according to claim 26, wherein the gating camera supplies the slice image corresponding to the range of interest to the main controller.

28. The gating camera according to claim 26, wherein the gating camera includes an identifier configured to detect a type of an object present in the range of interest based on the slice image, and returns a detection result by the identifier to the main controller.

29. The sensing system according to claim 26,

> wherein the main controller supplies data indicating a type of an object detected based on the output of the main sensor to the gating camera, and
> wherein the gating camera includes an identifier configured to detect a type of an object present in the range of interest based on the slice image, and returns a match and mismatch between the type detected by the classifier and the type indicated by the data to the main controller.

30. The gating camera according to any one of claims 26 to 29, wherein the camera controller defines a plurality of ranges by dividing a field of view in a depth direction, and selects one of the plurality of ranges as the range of interest based on the control signal.

31. The gating camera according to any one of claims 26 to 29, wherein the gating camera returns information indicating whether an object is contained in the range of interest to the main controller.

*FIG.1*

EP 4 201 745 A1

FIG.2

EP 4 201 745 A1

*FIG.3A*

OBJ₂        OBJ₃

20

RNG₁          RNG₂          RNG₃

*FIG.3B*

OBJ₂        OBJ₃

IMG₁          IMG₂          IMG₃

## FIG.4A

20

OBJ₃

RNG₁    RNG₂    RNG₃

## FIG.4B

OBJ₃

IMG₃

## FIG.4C

OBJ₃

EP 4 201 745 A1

## FIG.5

FIG.6

FIG.7

EP 4 201 745 A1

FIG.8A

FIG.8B

*FIG.9*

EP 4 201 745 A1

## INTERNATIONAL SEARCH REPORT

| International application No. |
|---|
| **PCT/JP2021/030393** |

### A. CLASSIFICATION OF SUBJECT MATTER

***B60R 1/00***(2022.01)i; ***G03B 15/00***(2021.01)i; ***G03B 15/03***(2021.01)i; ***G03B 7/00***(2021.01)i; ***H04N 5/225***(2006.01)i; ***H04N 5/232***(2006.01)i

FI: B60R1/00 A; H04N5/225 600; G03B15/00 V; G03B7/00; G03B15/03 F; H04N5/232 290; H04N5/232

According to International Patent Classification (IPC) or to both national classification and IPC

### B. FIELDS SEARCHED

Minimum documentation searched (classification system followed by classification symbols)

B60R1/00; G03B15/00; G03B15/03; G03B7/00; H04N5/225; H04N5/232

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2017/110413 A1 (KOITO MANUFACTURING CO., LTD.) 29 June 2017 (2017-06-29) paragraphs [0060]-[0095], fig. 1-9 | 1-31 |
| Y | JP 2009-257983 A (CALSONIC KANSEI CORP) 05 November 2009 (2009-11-05) paragraphs [0007]-[0051], fig. 1-12 | 1-31 |
| Y | WO 2020/121973 A1 (KOITO MANUFACTURING CO., LTD.) 18 June 2020 (2020-06-18) paragraphs [0022]-[0241], fig. 1-42 | 4-10, 22-25, 28-31 |
| Y | JP 2018-131084 A (HITACHI AUTOMOTIVE SYSTEMS LTD) 23 August 2018 (2018-08-23) paragraph [0002] | 6-10, 14-17 |
| Y | JP 2003-61939 A (PIONEER ELECTRONIC CORP) 04 March 2003 (2003-03-04) paragraphs [0073]-[0083] | 9-10, 17 |
| Y | WO 2018/003532 A1 (KYOCERA CORPORATION) 04 January 2018 (2018-01-04) paragraphs [0073]-[0075] | 19-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 October 2021** | **02 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/030393**

| Patent document cited in search report | | | Publication date (day/month/year) | Patent family member(s) | | | Publication date (day/month/year) |
|---|---|---|---|---|---|---|---|
| WO | 2017/110413 | A1 | 29 June 2017 | US | 2019/0004149 | A1 | |
| | | | | paragraphs [0079]-[0122], fig. 1-9 | | | |
| | | | | EP | 3396410 | A1 | |
| | | | | CN | 108431631 | A | |
| JP | 2009-257983 | A | 05 November 2009 | (Family: none) | | | |
| WO | 2020/121973 | A1 | 18 June 2020 | (Family: none) | | | |
| JP | 2018-131084 | A | 23 August 2018 | US | 2019/0359188 | A1 | |
| | | | | paragraphs [0002]-[0004] | | | |
| | | | | WO | 2018/150692 | A1 | |
| | | | | EP | 3584129 | A1 | |
| | | | | CN | 110198871 | A | |
| JP | 2003-61939 | A | 04 March 2003 | US | 2003/0043045 | A1 | |
| | | | | paragraphs [0086]-[0096] | | | |
| | | | | EP | 1291226 | A2 | |
| WO | 2018/003532 | A1 | 04 January 2018 | US | 2019/0205662 | A1 | |
| | | | | paragraphs [0094]-[0096] | | | |
| | | | | EP | 3481059 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009257983 A

- WO 2017110413 A1